# DEMANDE DE BREVET EUROPEEN

(11) **EP 4 775 025 A1**
(43) Date de publication de la demande: **15.07.2026**
(21) Numéro de dépôt: 26151683.5
(22) Date de dépôt: 13.01.2026
(51) Int. Cl.: A01G 7/04, A01G 17/02

(54) **DISPOSITIF DE PROTECTION, RENFORCEMENT ET STIMULATION POUR UN RANG VÉGÉTAL**

(30) Priorité: 13.01.2025 FR 2500348
(71) Demandeur: Naotec, 17800 Pons (FR)
(72) Inventeur: SANDOVAL, Laure, 87100 Limoges (FR)
(74) Mandataire: Aquinov

(57) **Abrégé**

L'invention concerne un dispositif (100) de protection, renforcement et stimulation pour un rang végétal et notamment un rang de vigne comprenant un châssis (101) apte à être attelé à des moyens de traction selon une direction d'avancement F.

Selon l'invention, ledit châssis (101) porte au moins deux modules (1) de protection, renforcement et stimulation du végétal, avec au moins un module gauche (1G) et au moins un module droit (1D), au moins un module (1,1G,1D) étant destiné à être placé de chaque côté dudit rang végétal en position de travail, ledit module (1,1G,1D) comprenant un boîtier (2) muni d'une ouverture et dans lequel est agencée au moins une source lumineuse apte à émettre un rayonnement dans le spectre UV en direction de l'ouverture, ladite au moins une source lumineuse comprenant une lampe UV moyenne pression (3).

## Description

La présente invention concerne le domaine technique des dispositifs de protection, renforcement et stimulation pour un rang végétal et notamment un rang de vigne.

Il existe une inquiétude grandissante au sujet des attaques d'insectes et de contamination par des champignons sur les cultures qui entrainent chaque année des pertes importantes notamment dans le domaine de la viticulture où le mildiou se développe chaque année.

Il est connu d'utiliser des produits phytosanitaires pour protéger les cultures de végétaux. Or ce recours systématique à des produits chimiques a des effets néfastes sur l'environnement et la santé. Dans le cadre d'une agriculture plus durable, une réduction voire une éradication de leurs usages est recherchée.

Des études ont montré l'efficacité de l'utilisation du rayonnement ultraviolet sur les végétaux pour les protéger des maladies.

Le rayonnement ultraviolet est un rayonnement invisible qui émet dans la gamme de longueur d'onde de 100 à 400 nanomètres. Le rayonnement ultraviolet se divise en trois bandes, à savoir UV-A, UV-B et UV-C. Les UV-A ont une longueur d'onde de 315 à 400 nm. Les UV-B ont une longueur d'onde de 280 à 315 nm. Les UV-C ont une longueur d'onde de 100 à 280 nm.

Il existe des méthodes d'application utilisant une technologie à base de lumière pulsée. Le spectre de la lumière pulsée balaye des longueurs d'ondes qui s'étendent des ultraviolets jusqu'aux infrarouges en passant par le visible. Des flashes de lumière à haute intensité et de courte durée sont appliqués de manière contrôlée sur les végétaux pour provoquer des effets spécifiques, à savoir stimuler la photosynthèse, renforcer les mécanismes de défense contre les pathogènes, lutter contre les stress abiotiques comme la sécheresse ou les variations de température.

Cette technologie utilisant la lumière pulsée UV présente toutefois des inconvénients.

Les paramètres de la lumière pulsée (durée, intensité, fréquence) sont dépendants du type de culture végétal, de son état mais également de son environnement et sont ainsi très difficiles à optimiser afin d'éviter des effets délétères de phytotoxicité. Seule une partie du spectre émis autour des UVs présente un intérêt pour protéger les cultures.

L'utilisation d'une technologie basée sur de la lumière pulsée ne permet pas de protéger efficacement contre toutes les attaques telles que le mildiou. Elle doit donc être tout de même associée à l'utilisation de produits phytosanitaires dans le domaine de la viticulture. De plus, pour observer des résultats significatifs, le temps de passage d'un traitement mis en œuvre à partir de cette technologie est relativement long, de l'ordre de 3km/h le long d'une culture végétal. L'installation industrielle de l'équipement de cette technologie par lumière pulsée et son coût associé compliquent son usage. Cette technologie fonctionne en haute tension, ce qui impose des consignes de sécurité relativement contraignantes à appliquer pour les utilisateurs et les agents de maintenance.

Il est également connu des méthodes utilisant une technologie basée sur l'utilisation des UV basse pression.

Les UV basse pression émettent dans le spectre UV-C. Ils sont notamment caractérisés par une raie d'émission à 254 nm. Les rayons UV-C ont le plus d'énergie. Ils sont très dangereux même à très forte dose pour toutes les formes de vie. Ils ne traversent pas la couche d'ozone et n'atteignent jamais la terre. Ils sont créés de façon artificielle pour tuer des agents pathogènes. Ils sont ainsi généralement utilisés pour la désinfection de l'eau ou d'une surface.

L'utilisation d'une technologie reposant sur le seul spectre UV-C montre des résultats limités en termes de stimulation des mécanismes de défenses des végétaux.

L'invention vise à pallier ces inconvénients en proposant un dispositif de protection, renforcement et stimulation pour un rang végétal et notamment un rang de vigne facile à utiliser le long du rang végétal, adaptable à différents profils de rangs végétaux et peu coûteux.

L'invention porte à ces fins sur un dispositif de protection, renforcement et stimulation pour un rang végétal et notamment un rang de vigne comprenant un châssis apte à être attelé à des moyens de traction selon une direction d'avancement F.

Selon l'invention, ledit châssis porte au moins deux modules de protection, renforcement et stimulation du végétal, avec au moins un module gauche et au moins un module droit, au moins un module étant destiné à être placé de chaque côté dudit rang végétal, ledit module comprenant un boîtier muni d'une ouverture et dans lequel est agencée au moins une source lumineuse apte à émettre un rayonnement dans le spectre UV en direction de l'ouverture, ladite au moins une source lumineuse comprenant une lampe UV moyenne pression.

Selon une forme de réalisation de l'invention, un module comprend une seule lampe UV moyenne pression.

Une lampe UV moyenne pression compatible avec l'invention est fabriquée avec du mercure pour un rayonnement UV à ondes courtes avec notamment un pic à 253,7 nm. Le spectre de la lampe peut être modifié par l'ajout d'additifs et l'ajustement de la quantité de mercure, afin de générer exactement les raies spectrales nécessaires pour leur conférer une compatibilité maximale avec les photorécepteurs des plantes permettant d'activer leurs mécanismes naturels de défense.

De plus, une telle lampe peut être dopée au fer optimisée pour la bande UV-A (315 à 400 nm), au gallium optimisée pour émettre dans la gamme 230 à 450 nm et le rayonnement UV-A, au l'indium optimisée pour la bande UV-B, au xénon optimisée pour obtenir un spectre de rayonnement quasi-continu, allant de 200 à 1000 nm environ avec notamment la présence d'IR.

Une position de travail est définie pour le dispositif selon l'invention lorsque les modules sont placés de chaque côté du rang végétal pour le traiter permettant ainsi un travail complet sur ledit rang végétal en un seul passage.

La mise en œuvre de modules gauche et droit portant chacun au moins une lampe UV moyenne pression permet l'utilisation de la technologie UV moyenne pression sur le châssis du dispositif qui est tracté le long du rang végétal.

Selon une caractéristique de l'invention, ledit au moins un module gauche et ledit au moins un module droit sont agencés afin d'orienter leurs ouvertures respectives sensiblement en vis-à-vis. Les ouvertures des modules gauche et droit sont ainsi orientées vers le rang végétal à traiter.

Selon une forme de réalisation de l'invention, le châssis comprend un portique modulable destiné à enjamber ledit rang végétal en position de travail, ledit portique modulable comportant une barre supérieure qui s'étend selon un axe transversal Y et au moins deux barres de support gauche et droite destinées à être placées respectivement à gauche et à droite dudit rang végétal en position de travail et les barres de support gauche et droite portant chacune au moins un module.

La mise en œuvre d'un tel portique modulable permet d'agencer au moins un module de chaque côté du rang végétal à traiter.

Selon une caractéristique de l'invention, les barres de support gauche et droite sont montées libres en translation selon l'axe transversal Y sur ladite barre supérieure.

La translation des barres de support gauche et droite le long de la barre supérieure permet d'ajuster simplement la distance des modules de chaque côté du rang végétal.

Selon une forme de réalisation de l'invention, au moins un module est monté en translation verticale selon un axe vertical Z sur la barre de support gauche ou droite le portant.

Un tel mouvement de translation le long de la barre de support gauche ou droite permet de régler la hauteur du module selon la hauteur du rang végétal optimisant ainsi le travail sur toute la hauteur du rang végétal.

Selon une autre caractéristique de l'invention, au moins un module est monté en pivot autour d'un axe transversal Y sur la barre de support gauche ou droite le portant.

Le mouvement pivot d'un module permet d'ajuster la surface de rayonnement émise.

Selon une caractéristique de l'invention, au moins deux modules sont destinés à être placés du même côté dudit rang végétal.

Disposer plusieurs modules du même côté d'un rang permet de doubler l'effet des rayonnements UV moyenne pression avec un seul passage du dispositif selon l'invention.

La mise en œuvre de deux modules d'un même côté du rang végétal permet également de placer l'un desdits modules à une hauteur plus importante que l'autre pour ainsi augmenter la hauteur de traitement pour un rang végétal de grande taille.

Selon une autre caractéristique de l'invention, le dispositif comprend au moins une cloison munie d'une paroi réfléchissante agencée pour diriger au moins une partie des rayonnements émis par au moins un module vers le rang végétal.

Agencer une cloison munie d'une paroi réfléchissante à proximité d'un module permet de diriger une partie du rayonnement qui n'a pas atteint le rang végétal.

Selon une forme de réalisation, le dispositif comprend deux cloisons disposées de chaque côté des barres de support gauche et droite, les parois réfléchissantes faisant face aux modules.

Un tel agencement permet d'optimiser la récupération des rayonnements perdus issus des modules et de les rediriger efficacement vers le rang végétal.

Selon une forme de réalisation de l'invention, le dispositif comprend au moins un boîtier de commande apte à commander au moins un module. La mise en œuvre d'au moins un boîtier de commande permet notamment de contrôler le préchauffage de la lampe mais également l'asservissement du refroidissement de l'unité.

Selon une forme de réalisation de l'invention, le dispositif comprend une génératrice apte à alimenter électriquement ledit au moins un boîtier de commande. La génératrice peut être entraînée par la prise en force du véhicule automobile lorsque le dispositif est tracté. La génératrice peut également être entraînée par un moteur hydraulique.

Bien entendu, les différentes caractéristiques, variantes et formes de réalisation de l'invention peuvent être associées les unes avec les autres selon diverses combinaisons dans la mesure où elles ne sont pas incompatibles ou exclusives les unes des autres.

De plus, diverses autres caractéristiques de l'invention ressortent de la description annexée effectuée en référence aux dessins qui illustrent des formes, non limitatives, de réalisation de l'invention et où :
[Fig.1] est une vue en perspective d'un exemple de réalisation d'un dispositif de protection, renforcement et stimulation du végétal selon l'invention,
[Fig.2] est une vue en perspective d'un exemple de réalisation d'un dispositif selon l'invention présentant un plan de coupe AA,
[Fig.3] est une vue en demi-coupe selon le plan de coupe AA de la figure 2,
[Fig.4] est une vue d'un exemple de réalisation de liaison d'un module droit dans le dispositif selon l'invention,
[Fig.5] est une vue de devant d'un autre exemple de réalisation d'un dispositif selon l'invention,
[Fig.6] est une vue de côté de la figure 5,
[Fig.7] est une vue de devant d'une variante de réalisation de la figure 4, et
[Fig.8] est une vue en perspective de l'exemple de réalisation illustré à la figure 7.

Il est à noter que sur ces figures les éléments structurels et/ou fonctionnels communs aux différentes variantes peuvent présenter les mêmes références.

Le repère orthogonal (X,Y,Z) est utilisé relativement au châssis du dispositif selon l'invention pour chaque figure et pour la description.

L'invention vise à proposer un dispositif de protection, renforcement et stimulation pour un rang végétal pour renforcer notamment les mécanismes de défense face aux pathogènes, pour stimuler la photosynthèse, pour lutter contre les stress abiotiques comme la sécheresse ou encore les variations de température.

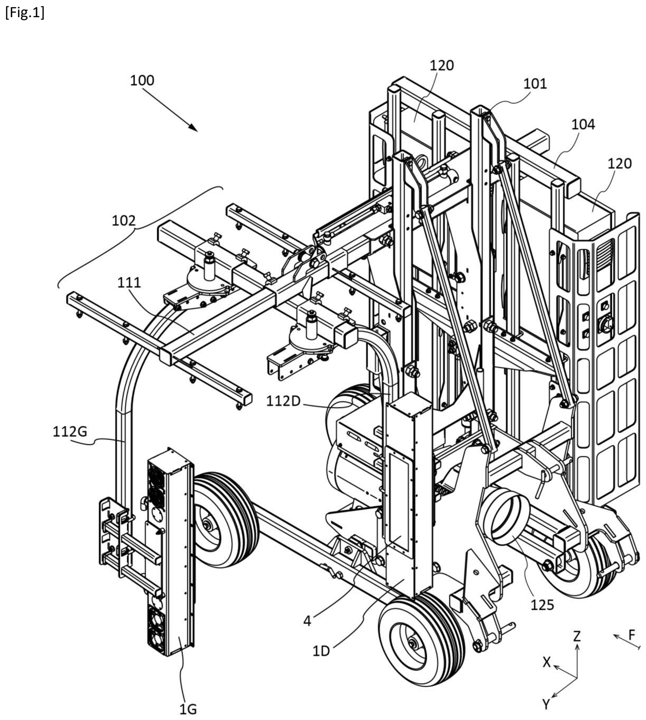

A ces fins, un dispositif désigné par la référence 100 tel qu'illustré à la figure 1 comprend un châssis 101 apte à être attelé à des moyens de traction (non illustrés) selon une direction d'avancement F.

Le châssis 101 selon l'invention porte des modules 1 de protection, renforcement et stimulation du végétal. En position de travail, le châssis 101 permet de placer les modules 1 de chaque côté gauche et droit du rang végétal (non représenté). Selon la forme de réalisation illustrée, le châssis 101 comprend un portique modulable 102 apte à enjamber le rang végétal.

Ainsi un véhicule de type tracteur enjambeur ou tracteur interligne positionne le dispositif 100 au début du rang végétal et avance selon la direction d'avancement F en entrainant ainsi le dispositif apte à travailler le long dudit rang végétal. D'autres formes de réalisation de moyens de traction sont compatibles dans le cadre de l'invention.

Les termes « avant », « haut », « arrière », « bas », « gauche » et « droite » sont définis selon le référentiel orthogonal (X,Y,Z) du châssis 101 du dispositif 100 avec un axe horizontal X, un axe vertical Z et un axe transversal Y. En position de travail, l'axe horizontal X tend à s'aligner avec la direction d'avancement F. La direction F définit le sens d'avancement du dispositif 100 sur le rang végétal définissant ainsi un côté gauche et un côté droit du rang végétal utilisés dans les figures et la description.

Le châssis 101 comprend une structure tubulaire soutenant le portique modulable 102 destiné à enjamber le rang végétal en position de travail.

Le portique modulable 102 illustré comprend une barre supérieure 111 et de deux barres de support gauche 112G et droite 112D. La barre supérieure 111 s'étend selon l'axe transversal Y. Les deux barres de support gauche 112G et droite 112D sont destinées à être positionnées de chaque côté respectif gauche et droit du rang végétal en position de travail.

La figure 1 illustre un premier exemple d'un dispositif 100 comprenant deux modules 1 avec un module gauche 1G destiné à être placés du côté gauche du rang végétal en position de travail et un module droit 1D destiné à être placés du côté droit du rang végétal en position de travail.

D'autres configurations de dispositions des modules 1G,1D sont compatibles dans le cadre de l'invention avec un nombre plus important de modules 1 en gardant au moins un module gauche 1G et au moins un rouleau d'effeuillage droit 1D.

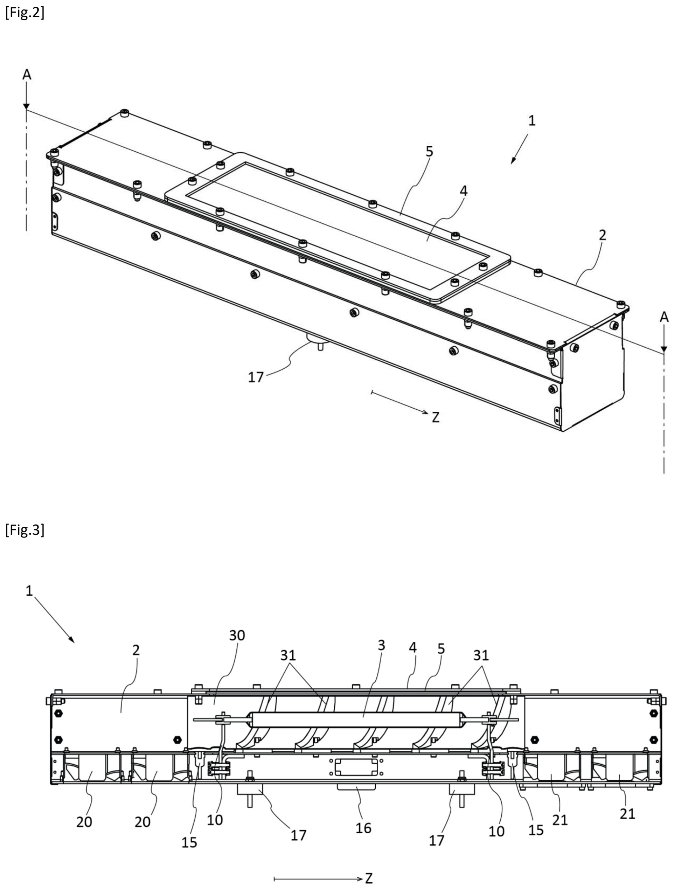

Un module 1 de protection, renforcement et stimulation du végétal compatible avec l'invention tel qu'illustré aux figures 2 et 3 comprend un boîtier 2 de forme sensiblement parallélépipédique définissant un espace intérieur et muni d'une ouverture sur l'une de ses faces. Au moins une source lumineuse est agencée à l'intérieur du boîtier 2. D'autres formes de boîtier 2 sont compatibles dans le cadre de l'invention.

Selon la forme de réalisation illustrée, notamment visible à la figure 3, la source lumineuse comprend une lampe UV moyenne pression 3. La lampe UV moyenne pression 3 comprend une forme tubulaire qui s'étend selon l'axe vertical Z.

Le boîtier 2 comprend des parois opaques qui ne laissent pas passer les rayonnements optiques. Le boîtier 2 est également muni d'une ouverture permettant au moins le passage des rayonnements UV.

Selon une forme de réalisation, le boîtier 2 est réalisé en aluminium afin d'éviter les oxydations dues aux intempéries.

L'ouverture s'étend selon l'axe vertical Z et est obturée par une vitre de protection 4 apte au passage du rayonnement UV. Selon la forme de réalisation illustrée, la vitre de protection 4 est montée dans un cadre 5 fixé au boîtier 2 par un système boulonné.

La vitre de protection 4 est réalisée en quartz et non en verre car le verre joue un rôle de filtre sur les longueurs d'ondes présentes dans le domaine des UV et, par conséquent, ne les laisse plus passer.

Selon la forme de réalisation de l'invention, l'ouverture est de forme rectangulaire. D'autres formes d'ouverture sont compatibles dans le cadre de l'invention.

La forme allongée de l'ouverture rectangulaire selon l'exemple de réalisation illustré permet de mettre en vis-à-vis les rayonnements émis par la lampe UV moyenne pression 3 avec un végétal pour le renforcer efficacement sur sa hauteur.

La connexion se fait quant à elle par des connecteurs type fiche banane haute tension 15. Un connecteur, de type connecteur industriel modulaire 16 permet le branchement du module 1 de protection, renforcement et stimulation du végétal à un système d'alimentation électrique, de signaux de contrôle, de données. Les câbles d'alimentation de la lampe UV moyenne pression 3 (non visibles) sont blindés à l'intérieur du boîtier 2 afin d'éviter des perturbations électromagnétiques dues à la haute tension.

Selon la forme de réalisation illustrée, le système d'alimentation électrique, de signaux de contrôle, de données comprend un boîtier de commande 120 par module 1.

A ces fins, le châssis 101 comprend une structure portante 104 agencée du côté opposé au portique modulable 102. Ainsi l'accès au boîtier de commande est facilité.

D'autres configurations et agencement du système d'alimentation électrique, de signaux de contrôle, de données des modules 1 sont possibles.

Selon la forme de réalisation illustrée, le module 1 comprend trois silent bloc 17 composés d'un matériau élastique destinées à absorber les vibrations et les chocs lorsqu'ils sont en prise à une platine de fixation 130 pour fixer le module 1 au dispositif 100.

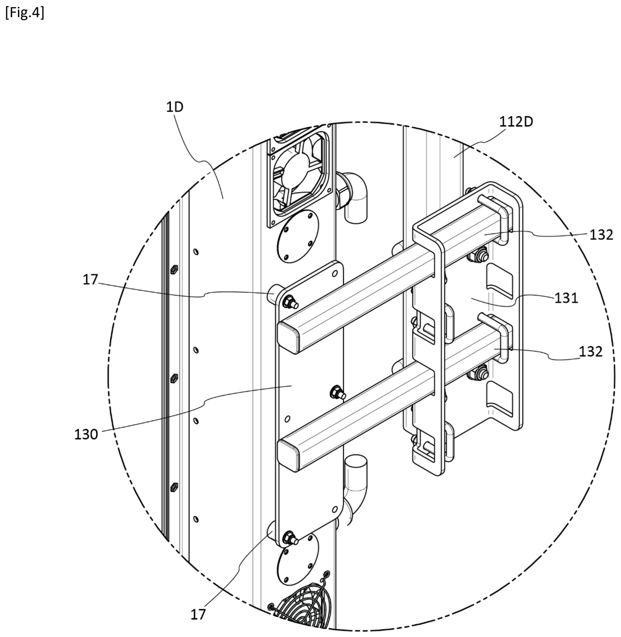

La figure 4 illustre une forme de réalisation d'un module 1 fixé à une barre de support gauche 112G ou droite 112D. La platine de fixation 130 est reliée à un support d'accueil 131 de la barre de support gauche 112G ou droite 112D aux moyens de barres de renfort 132. Selon l'exemple illustré, deux barres de renfort 132 sont fixées sur la platine de fixation 130 et traversent le support d'accueil 131 et sont maintenues dans celui-ci.

Avantageusement la support d'accueil 131 est libre en translation le long de la barre de support gauche 112G ou droite 112D le portant permettant ainsi le mouvement du module 1 selon l'axe vertical Z.

Selon une forme de réalisation non illustrée, le support d'accueil 131 est également en liaison pivot autour de l'axe transversal Y sur la barre de support gauche 112G ou droite 112D le portant permettant ainsi le mouvement du module 1 autour de l'axe transversal Y.

Selon la forme de réalisation illustrée, le boîtier 2 comprend deux entrées d'air et deux sorties d'air de part et d'autre de la lampe UV moyenne pression 3.

Les deux entrées d'air sont situées sur un premier côté du boîtier 2 et sont munies chacune d'un ventilateur d'entrée 20 apte à générer un flux d'air vers l'intérieur du boîtier 2.

Les deux sortie d'air sont situées sur un deuxième côté du boîtier 2, à l'opposé du premier côté du boîtier 2. La lampe UV moyenne pression 3 est située entre le premier côté du boîtier 2 et le deuxième côté du boîtier 2. Selon la forme de réalisation illustrée, les deux sorties d'air sont munies chacune d'un ventilateur de sortie 21 apte à générer un flux d'air vers l'extérieur du boîtier 2.

Le module de renforment végétal 1 comprend également un réflecteur 30 apte à réfléchir le rayonnement de la lumière UV à moyenne pression 3 vers l'ouverture.

Le réflecteur 30 illustrée comprend une forme courbe concave s'étendant selon l'axe vertical Z.

Selon une forme de réalisation non illustrée, le réflecteur a une forme semi-cylindrique ellipsoïdale, obtenue en coupant un cylindre ellipsoïdal verticalement en deux parties égales.

Selon cette forme de réalisation, la lampe UV moyenne pression 3 est disposée dans une zone centrale du réflecteur 30. La zone centrale étant définie comme une zone comprenant un des foyers définies pour concevoir la forme elliptique du cylindre ellipsoïdal. Cette configuration permet d'optimiser la réflexion du rayonnement de la lampe UV moyenne pression 3.

Pour favoriser le brassage de l'air à l'intérieur du boîtier 2, des ailettes 31 s'étendent depuis le réflecteur 30 selon une direction non orthogonale à l'axe vertical Z. Selon la forme de réalisation illustrée, les ailettes 31 sont disposées à intervalle régulier autour de la lampe UV moyenne pression 3.

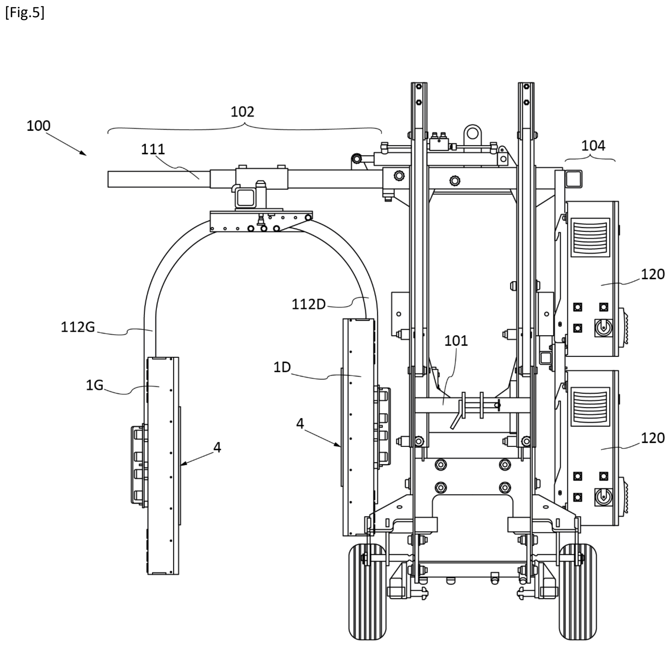

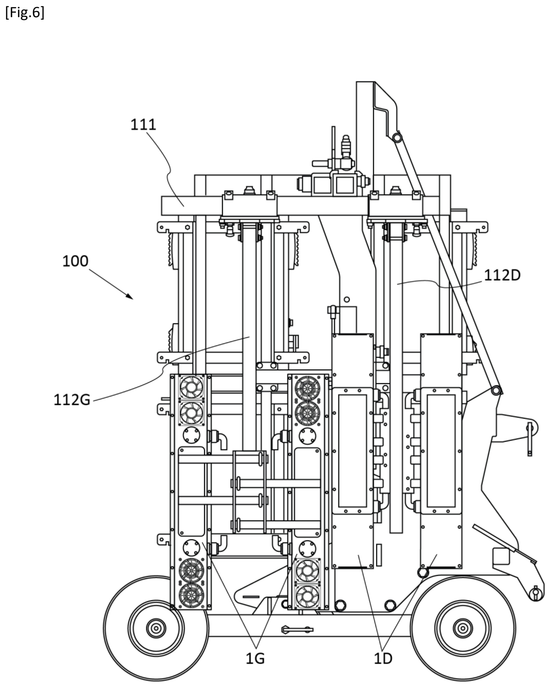

Les figures 5 et 6 illustrent un deuxième exemple de réalisation d'un dispositif 1 comprenant quatre modules 1 avec deux modules gauches 1G destinés à être placés du côté gauche du rang végétal en position de travail et deux modules droits 1D destinés à être placés du côté droit du rang végétal en position de travail.

Selon cette forme de réalisation, chacune des barres de support gauche 112G et droite 112D porte deux modules gauches 1G ou droits 1D. Quatre boîtiers de commande 120 sont alors agencés dans la structure portante 104.

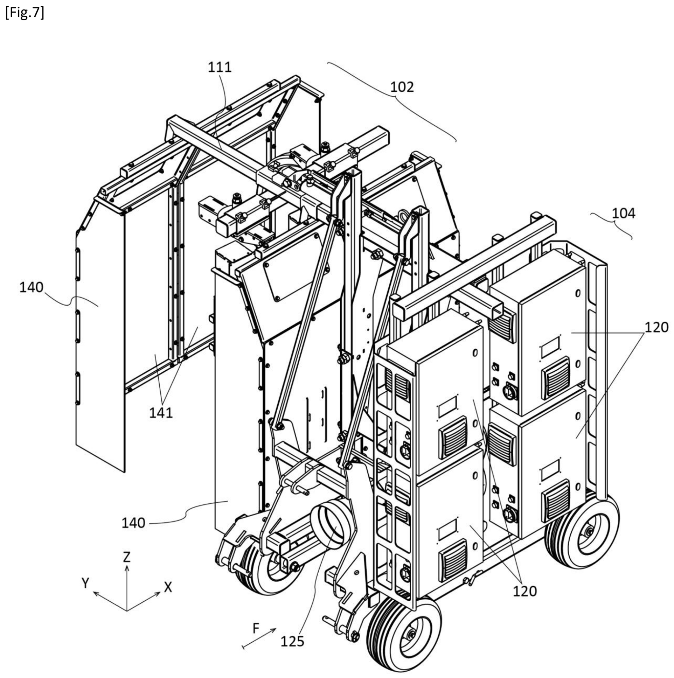

Les figures 7 et 9 illustrent une variante de réalisation dans lequel le portique modulable 102 comprend deux cloisons 140 munies chacune d'une paroi réfléchissante 141. Les parois réfléchissantes font faces aux modules gauches1G et droits 1D pour diriger au moins une partie des rayonnements émis vers le rang végétal.

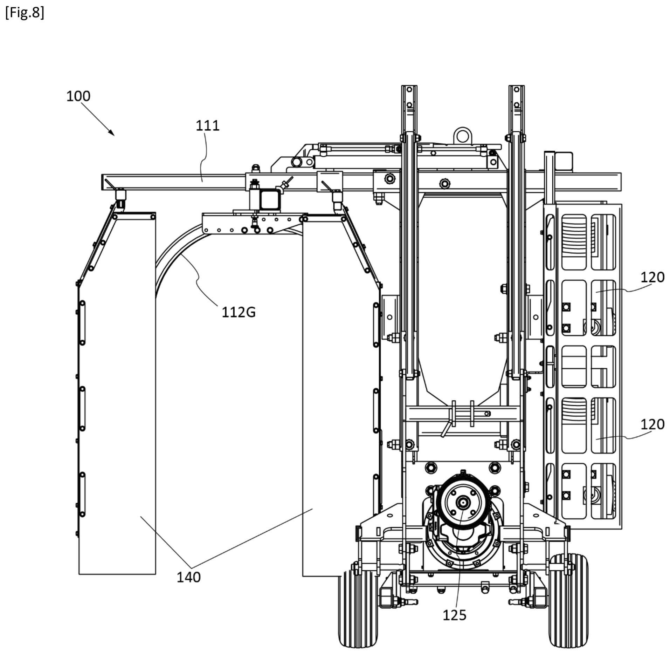

Pour mettre en œuvre un dispositif 1 selon l'invention, en particulier le dispositif 1 illustré aux figures 7 et 8, le châssis 101 est attelé à un tracteur ou autre véhicule apte à placer le dispositif 1 au début d'un rang végétal, par exemple une vigne.

L'écartement des barres de support gauche et droit est adapté à la largeur de la vigne.

Les modules gauches 1G et droits 1D sont alors ajustés au profil gauche et droite et à la hauteur de la vigne.

Le dispositif 100 est ainsi en position de travail au début de la vigne et les modules gauches 1G et droits 1D sont activés via leurs boîtier de commande 120 respectifs.

Le dispositif 100 en position de travail avec les modules gauches 1G et droits 1D activés est tracté le long de la vigne selon la direction d'avancement F.

Bien entendu, diverses autres modifications peuvent être apportées à l'invention dans le cadre des revendications annexées.

## Revendications

1. Dispositif (100) de protection, renforcement et stimulation pour un rang végétal et notamment un rang de vigne comprenant un châssis (101) apte à être attelé à des moyens de traction selon une direction d'avancement F, **caractérisé en ce que** ledit châssis (101) porte au moins deux modules (1) de protection, renforcement et stimulation du végétal, avec au moins un module gauche (1G) et au moins un module droit (1D), au moins un module (1,1G,1D) étant destiné à être placé de chaque côté dudit rang végétal en position de travail, ledit module (1,1G,1D) comprenant un boîtier (2) muni d'une ouverture et dans lequel est agencée au moins une source lumineuse apte à émettre un rayonnement dans le spectre UV en direction de l'ouverture, ladite au moins une source lumineuse comprenant une lampe UV moyenne pression (3).

2. Dispositif (100) selon la revendication précédente dans lequel ledit au moins un module gauche (1G) et ledit au moins un module droit (1D) sont agencés afin d'orienter leurs ouvertures respectives sensiblement en vis-à-vis.

3. Dispositif (100) selon l'une des revendications précédentes dans lequel le châssis (101) comprend un portique modulable (102) destiné à enjamber ledit rang végétal en position de travail, ledit portique modulable (102) comportant une barre supérieure (111) qui s'étend selon un axe transversal (Y) et au moins deux barres de support gauche (112G) et droite (112D) destinées à être placées respectivement à gauche et à droite dudit rang végétal en position de travail et les barres de support gauche (112G) et droite (112D) portant chacune au moins un module (1,1G,1D).

4. Dispositif (100) selon la revendication précédente dans lequel les barres de support gauche (112G) et droite (112D) sont montées libres en translation selon l'axe transversal (Y) sur ladite barre supérieure (111).

5. Dispositif (100) selon l'une des revendications précédentes dans lequel au moins un module (1,1G,1D) est monté en translation verticale selon un axe vertical (Z )sur la barre de support gauche (112G) ou droite (112D) le portant.

6. Dispositif (100) selon l'une des revendications précédentes dans lequel au moins un module (1,1G,1D) est monté en pivot autour d'un axe transversal (Y) sur la barre de support gauche (112G) ou droite (112D) le portant.

7. Dispositif (100) selon l'une des revendications précédentes dans lequel au moins deux modules (1,1G,1D) sont destinés à être placés du même côté dudit rang végétal.

8. Dispositif (100) selon l'une des revendications précédentes comprenant au moins une cloison (140) munie d'une paroi réfléchissante (141) agencée pour diriger au moins une partie des rayonnements émis par au moins un module (1,1G,1D) vers le rang végétal.

9. Dispositif (100) selon la revendication précédente comprenant au moins deux cloisons (140) disposées de chaque côté des barres de support gauche (112G) et droite (112D), les parois réfléchissantes (141) faisant face aux modules (1,1G,1D).

10. Dispositif (100) selon l'une des revendications précédentes comprenant au moins un boîtier de commande (120) apte à commander au moins un module (1,1G,1D).

11. Dispositif (100) selon la revendication précédente comprenant une génératrice (125) apte à alimenter électriquement ledit au moins un boîtier de commande (120).
